# EUROPEAN PATENT APPLICATION

(11) **EP 3 974 476 A1**
(43) Date of publication of application: **30.03.2022**
(21) Application number: 20906491.4
(22) Date of filing: 15.09.2020
(51) Int. Cl.: C08L 77/00, C08L 51/06, C08L 51/00, C08L 55/02, C08L 51/04, C08K 13/06, C08K 9/04, C08K 9/06, C08K 3/34

(54) **ELECTROPLATED NYLON MATERIAL AND PREPARATION METHOD THEREOF**

(30) Priority: 24.12.2019 CN 201911344919
(71) Applicant: Shanghai Zhonglei New Material Science Co., Ltd., Shanghai 201306 (CN)
(72) Inventor: LIU, Chunyan, Shanghai 201306 (CN)
(74) Representative: Weber, Jean-François
(86) International application number: PCT/CN2020/115200
(87) International publication number: WO 2021/128964

(57) **Abstract**

Disclosed in the present document are an electroplated nylon material and a preparation method thereof. Components of the electroplated nylon material comprise, by weight, 50-80 parts polyamide, 20-50 parts modified minerals and 2-8 parts compatibilizer. The modified minerals are obtained after minerals have gone through coupling agent processing and rare earth ion processing.

## Description

### TECHNICAL FIELD

The present application belongs to the field of macromolecule materials, and for example, relates to an electroplated nylon material and a preparation method thereof.

### BACKGROUND

Polyamide (PA), commonly known as nylon, is a linear polymer with repeating units, amide bonds (-CONH-), in its molecule. PA is formed through the polycondensation of diprotic acids and diamines, and may also be formed through the ring-opening polymerization of amino acid caprolactam. PA is an engineering plastic with excellent performance and has been widely used in machinery, automobiles, electrical appliances, and other industries due to its advantages of good mechanical strength, self-lubricating property, good wear resistance, shock absorption, and sound attenuation. However, polyamide molecules have polar amide bonds and may easily absorb water, resulting in poor dimensional stability and the decrease of the mechanical strength. In addition, the notch impact toughness of polyamide is poor. These problems limit the application range of polyamide.

Plastic electroplating is to coat the plastic surface with metal, which not only can achieve good metal texture, but also can reduce the weight of products. Plastic electroplating not only effectively improves the appearance and decorativeness of plastics, but also improves the electrical, thermal, and corrosion resistance properties of plastics. Therefore, a large number of plastic electroplated products have been used in electronics, automobiles, household appliances, and other industries today. At present, the common method to implement polyamide electroplating is to add inorganic minerals, metal oxides, and glass fibers into polyamide.

CN101787204A provides a low water absorption polyamide composition and a preparation method thereof. The polyamide composition consists of 10 to 90 parts by weight of polyamide, 10 to 60 parts by weight of styrene resin, 3 to 10 parts by weight of phyllosilicate clay, less than 2 parts by weight of additive, 2 to 10 parts by weight of compatibilizer, and 5 to 20 parts by weight of short glass fiber. This invention has the characteristics of solvent resistance, high tenacity and easy processability of polyamide and the characteristic of low water absorption of ABS resin. Besides, phyllosilicate clay speeds up crystallization of polyamide, the degree of crystallization and mechanical strength are improved, extremely low water absorption is obtained, and the dimensional stability of the material is greatly improved while impact toughness is maintained. However, the polyamide polymer prepared by this method cannot be used for electroplating.

CN106046781A provides an aromatic polyamide composite for electroplating treatment. The aromatic polyamide compound includes the following components, by mass, 40% to 70% of aromatic polyamide resin, 5% to 10% of aliphatic polyamide powder, 0.2% to 1% of caprolactam, 0.1% to 0.5% of sodium caprolactam and 20% to 50% of inorganic oxide mineral powder. The prepared aromatic polyamide compound greatly improves the bonding force of electroplating layers, the water resistance, the tensile strength, the bending strength and the shock resistance, and thus the demands of consumers and the industrial development can be certainly better met. However, the formability of aromatic polyamide and semi-aromatic polyamide is poorer than the formability of aliphatic polyamide, and the injection molded parts formed by aromatic polyamide or semi-aromatic polyamide are prone to residual internal stress, which eventually leads to poor electroplating and high cost.

CN108164995A provides a high-strength easily-platable polyamide composite material, and a preparation method thereof. The high-strength easily-platable polyamide composite material comprises following ingredients at a certain weight ratio: polyamide resin, organic modified nano-montmorillonite, an inorganic filler, silane coupling agent, caprolactam, an initiator, an anti-oxidant, and a lubricant. The high-strength easily-platable polyamide composite material of this invention realizes uniform dispersion of montmorillonite and the inorganic filler in polyamide matrix material on nanometer scale, which can serve as riveting points to increase the bonding force between the resin matrix material and metal plating layer in the electroplating coarsening process, so as to obtain products having high electroplating bonding force. However, the rigidity and impact toughness of the nylon material provided by this invention need to be improved.

Therefore, how to obtain a nylon material which has excellent rigidity and high impact toughness at normal and low temperature and is easy to electroplate has become an urgent problem to be solved at present.

### SUMMARY

The object of the present application is to provide an electroplated nylon material and a preparation method thereof. The electroplated nylon material provided by the present application has the characteristics of excellent rigidity, good impact toughness at normal and low temperatures, and high electroplating qualification rate, and is an electroplated nylon material with good performance. To achieve this object, the present application adopts the technical solutions described below.

In a first aspect, the present application provides an electroplated nylon material. Based on that total weight of the electroplated nylon material is taken as 100 parts, the electroplated nylon material includes the following components, by weight:

| | |
|---|---|
| polyamide | 50 to 80 parts |
| modified mineral | 20 to 50 parts |
| compatibilizer | 2 to 8 parts. |

In the electroplated nylon material provided by the present application, polyamide is used as the matrix material, a modified mineral and a compatibilizer are added, and the dosage of each component is adjusted to enable the components to cooperate with each other, so that the composite material has high electroplating qualification rate, excellent rigidity, and high impact toughness at normal and low temperatures.

In the present application, the polyamide is 50 to 80 parts by weight, for example, 50 parts, 55 parts, 60 parts, 65 parts, 70 parts, 75 parts, 80 parts, etc.

The modified mineral is 20 to 50 parts by weight, for example, 20 parts, 25 parts, 30 parts, 35 parts, 40 parts, 45 parts, 50 parts, etc.

The compatibilizer is 2 to 8 parts by weight, for example, 2 parts, 2.5 parts, 3 parts, 3.5 parts, 4 parts, 5 parts, 6 parts, 7 parts, 8 parts, etc.

The addition of the compatibilizer can further improve the dispersion and compatibility of minerals in PA matrix materials and can provide physical crosslinking points for minerals, which significantly improves the impact toughness of composites at normal and low temperatures.

As an optional technical solution of the present application, the polyamide is selected from any one or a combination of more than two of PA6, PA46, PA56, PA66, PA610, PA612, PA613, PA11, PA12, PA1010, PA1012, PA1111, PA1313, PA6T, PA9T, PA10T, PA6I, or PA6I/6T.

Optionally, the modified mineral is a mineral modified by a modifier.

Optionally, the mineral is selected from any one or a combination of more than two of a silicate mineral, a carbonate mineral, a borate mineral, or a metal oxide.

Optionally, the mineral is selected from any one or a combination of more than two of wollastonite, pyroxene, dickite, vermiculite, halloysite, sepiolite, montmorillonite, bentonite, kaolin, talcum, margarite, phlogopite, sericite, biotite, muscovite, limestone, nahcolite, kalicinite, calcite, dolomite, ankerite, huntite, fairchildite, shortite, carbocernaite, nesquehonite, trona, gaylussite, hydromagnesite, ascharite, ludwigite, lagonite, priceite, aluminium oxide, iron oxide, magnesium oxide, zinc oxide, copper oxide, or calcium oxide.

Optionally, the modifier is a coupling agent and a rare earth ion.

The modified mineral in the present application is a mineral obtained after processed by using a coupling agent and then a rare earth ion. Through the processing with the coupling agent and the rare earth ion, the dispersion of minerals in PA is improved both chemically and physically, which not only improves the rigidity of the mixture, but also enable the obtained electroplated nylon material to have excellent rigidity and good impact toughness at normal and low temperature, so that the electroplated nylon material is suitable for electroplating with high electroplating qualification rate.

Optionally, the coupling agent is selected from any one or a combination of more than two of a silane coupling agent, a titanate coupling agent, an aluminate coupling agent, or a zirconate coupling agent.

Optionally, the coupling agent is selected from any one or a combination of more than two of γ-aminopropyltrimethoxysilane, γ-aminopropyltriethoxysilane, γ-glycidoxypropyltrimethoxysilane, γ-glycidoxypropyltriethoxysilane, *N*-β-(aminoethyl)-γ-aminopropyltrimethoxysilane, *N-*(β-aminoethyl)-γ-aminopropylmethyldimethoxysilane, γ-ureidopropyltriethoxysilane, *N*-aminoethyl-γ-aminopropyltriethoxysilane, γ-aminopropylmethyldiethoxysilane, *N-*(β-aminoethyl)-γ-aminopropyltriethoxysilane, polyaminoalkyltrialkoxysilane, anilino-methyl-trimethoxysilane, isopropyl tri(dioctylphosphoryloxy) titanate, titanium triisostearoylisopropoxide, isopropyl dioleic(dioctylphosphate) titanate, isopropyl tri(dioctylphosphate)titanate, isopropyl trioleyl titanate, isopropyl tri(dioctylpyrophosphate) titanate, bis(P,P-bis-ethylhexyl diphosphato)ethanediolato titanate, bis(P,P-bis-ethylhexyl diphosphato)ethanediolato titanate triethanolamino chelate, tetraisopropyl di(dioctylphosphate) titanate, distearoyl isopropoxy aluminate, isopropoxy distearate acyloxy aluminate, trimethyl aluminate, triisopropyl aluminate, tribenzyl aluminate, alkoxy tris(vinyl-ethoxy) zirconate, alkoxy tris(p-aminophenoxy) zirconate, bis(diethyl citrate) dipropoxy zirconium chelate, or tetrakis(triethanolamino) zirconium.

Optionally, the rare earth ion is selected from any one or a combination of more than two of zirconium ion, cobalt ion, lanthanum ion, praseodymium ion, samarium ion, europium ion, gadolinium ion, holmium ion, erbium ion, ytterbium ion, lutetium ion, scandium ion, indium ion, neodymium ion, cerium ion, yttrium ion, thulium ion, dysprosium ion, or terbium ion.

As an optional technical solution of the present application, the preparation method of the modified mineral includes the following steps.
(1) dispersing a mineral in a solvent after vacuum drying;
(2) mixing and reacting the mineral with a coupling agent, and separating to obtain a coupling agent-modified mineral; and
(3) dispersing the coupling agent-modified mineral in a solution containing a rare earth ion to obtain the modified mineral.

As an optional technical solution of the present application, the vacuum drying in step (1) is performed at a temperature of 100°C to 120°C, for example, 100°C, 105°C, 110°C, 112°C, 115°C, 120°C, etc., for 4 hours to 6 hours, for example, 4 hours, 4.2 hours, 4.5 hours, 5 hours, 5.5 hours, 6 hours, etc.

Optionally, the solvent in step (1) is toluene.

Optionally, the reacting in step (2) is performed at a temperature of 80°C to 100°C, for example, 80°C, 85°C, 88°C, 90°C, 95°C, 100°C, etc., for 6 hours to 8 hours, for example, 6 hours, 6.2 hours, 6.5 hours, 7 hours, 7.5 hours, 8 hours, etc.

Optionally, the solution containing the rare earth ion in step (3) is selected from any one of a rare earth acetate solution, a rare earth nitrate solution, or a rare earth sulfate solution.

Optionally, the rare earth ion in the solution containing the rare earth ion in step (3) is at a mass concentration of 0.5% to 1.5%, for example, 0.5%, 0.8%, 1%, 1.2%, 1.3%, 1.5%, etc.

Optionally, the dispersing in step (3) is performed in a method of ultrasonic dispersing for 1.5 hours to 2.5 hours, for example, 1.5 hours, 1.8 hours, 2 hours, 2.1 hours, 2.3 hours, 2.5 hours, etc.

As an optional technical solution of the present application, the compatibilizer is selected from any one or a combination of more than two of polyolefin elastomer grafted with maleic anhydride (POE-g-MAH), styrene-butadiene-styrene grafted with maleic anhydride (SBS-g-MAH), styrene-ethylene/butylene-styrene grafted with maleic anhydride(SEBS-g-MAH), ethylene-propylene-diene monomer grafted with maleic anhydride (EPDM-g-MAH), acrylonitrile-butadiene-styrene copolymer grafted with maleic anhydride (ABS-g-MAH), acrylonitrile-styrene-acrylate copolymer grafted with maleic anhydride (ASA-g-MAH), low-density polyethylene grafted with maleic anhydride (LDPE-g-MAH), linear low-density polyethylene grafted with maleic anhydride (LLDPE-g-MAH), ultra-high-molecular-weight polyethylene grafted with maleic anhydride (UHMWPE-g-MAH), styrene maleic anhydride copolymer (SMA), styrene-acrylonitrile grafted with maleic anhydride (SAN-g-MAH), polyolefin elastomer grafted with glycidyl methacrylate (POE-g-GMA), ethylene-propylene-diene monomer grafted with glycidyl methacrylate (EPDM-g-GMA), polyethylene grafted with glycidyl methacrylate (PE-g-GMA), methacrylate-butadiene grafted with glycidyl methacrylate (MB-g-GMA), methyl methacrylate-glycidyl methacrylate-ethyl acrylate terpolymer (MGE), or imide acrylic acid (IA), optionally, POE-g-MAH.

As an optional technical solution of the present application, the electroplated nylon material further includes 0.1 to 1.0 part (for example, 0.1 part, 0.2 part, 0.3 part, 0.5 part, 0.6 part, 0.7 part, 0.8 part, 0.9 part, 1.0 part, etc.,) of antioxidant by weight.

Optionally, the electroplated nylon material further includes 0.1 to 1.0 part (for example, 0.1 part, 0.2 part, 0.3 part, 0.5 part, 0.6 part, 0.7 part, 0.8 part, 0.9 part, 1.0 part, etc.,) of ultraviolet absorber by weight.

Optionally, the electroplated nylon material further includes 0.1 to 1.0 part (for example, 0.1 part, 0.2 part, 0.3 part, 0.5 part, 0.6 part, 0.7 part, 0.8 part, 0.9 part, 1.0 part, etc.,) of light stabilizer by weight.

Optionally, the electroplated nylon material further includes 0.1 to 1.0 part (for example, 0.1 part, 0.2 part, 0.3 part, 0.5 part, 0.6 part, 0.7 part, 0.8 part, 0.9 part, 1.0 part, etc.,) of heat stabilizer by weight.

Optionally, the electroplated nylon material further includes 0.1 to 1.0 part (for example, 0.1 part, 0.2 part, 0.3 part, 0.5 part, 0.6 part, 0.7 part, 0.8 part, 0.9 part, 1.0 part, etc.,) of lubricant by weight. The lubricant can improve the processing fluidity of alloy materials and also help to improve the wear resistance.

Optionally, the antioxidant is selected from any one or a combination of more than two of tris(2,4-di-tert-butylphenyl)phosphite, pentaerythritol tetrakis[β-(3,5-di-tert-butyl-4-hydroxyphenyl)propionate], *N*,*N*'-bis[β-(3,5-di-tert-butyl-4-hydroxyphenyl)propionyl] hexamethylenediamine, bis(2,4-di-tert-butylphenyl)pentaerythritol diphosphite, n-octadecyl-β-(3,5-di-tert-butyl-4-hydroxyphenyl)propionate, tris(2,4-di-tert-butyl)phosphite, hindered phenol n-octadecyl-(3,5-di-butyl-4-hydroxy-phenyl)propionate, 1,3,5-tris(3,5-di-tert-buty1,4-hydroxybenzyl)-s-triazine, 2,4,6-(1*H*,3*H*,5*H*)-trione, *N*,*N*'-bis(3-(3,5-di-tert-butyl-4-hydroxyphenyl)propionyl) hexamethylenediamine, triethylene glycol bis[β-(3-tert-butyl-4-hydroxy-5-methylphenyl)propionate], or distearyl pentaerythritol diphosphite.

Optionally, the ultraviolet absorber is selected from any one or a combination of more than two of a benzoate ultraviolet absorber, a salicylate ultraviolet absorber, a benzophenone ultraviolet absorber, a benzotriazole ultraviolet absorber, or a triazine ultraviolet absorber.

The benzoate ultraviolet absorber, salicylate ultraviolet absorber, benzophenone ultraviolet absorber, benzotriazole ultraviolet absorber and triazine ultraviolet absorber can absorb ultraviolet light strongly and transform light energy into heat energy to be emitted, thereby improving the ultraviolet resistance of materials. The benzoate ultraviolet absorber, salicylate ultraviolet absorber, benzophenone ultraviolet absorber, benzotriazole ultraviolet absorber and triazine ultraviolet absorber are all organic compounds, which have good compatibility with matrix materials and do not affect the mechanical properties of alloy materials.

Optionally, the ultraviolet absorber is selected from any one or a combination of more than two of 2,4-dihydroxybenzophenone, 2-hydroxy-4-methoxybenzophenone, 2-hydroxy-4-n-octyloxybenzophenone, 2-(2-hydroxy-5-methyl-phenyl)benzotriazole, 2-(2'-hydroxy-3',5'-bis(α,α-dimethylbenzyl)phenyl)benzotriazole, 2-(2-hydroxy-3-tert-butyl-5-methylphenyl)-5-chlorobenzotriazole, 2-(2'-hydroxy-3',5'-di-tert-phenyl)-5-chlorobenzotriazole, 2-(2-hydroxy-3,5-di-tert-pentylphenyl)benzotriazole, 2-(2'-hydroxy-4'-benzoyloxyphenyl)-5-chloro-2*H*-benzotriazole, resorcinol monobenzoate, 2-(4,6-bis(2,4-dimethylphenyl)-1,3,5-triazin-2-yl)-5-octyloxyphenol, 2,4,6-tris(2'-hydroxy-4'-n-butoxyphenyl)-1,3 ,5-triazine, 2-(4,6-diphenyl-1,3,5-triazin-2)-5-n-hexyloxyphenol, phenyl salicylate, salicylic acid-4-isopropylbenzyl ester, 2-ethylhexyl salicylate, or hexamethylphosphoric triamide.

Optionally, the light stabilizer is selected from any one or a combination of more than two of 4-benzoyloxy-2,2,6,6-tetramethylpiperidine, bis(1,2,2,6,6-pentamethyl-4-piperidinyl)sebacate, benzoic acid 2,2,6,6-tetramethylpiperidine, a polymer of butanedioic acid and 4-hydroxy-2,2,6,6-tetramethyl-1-piperidineethanol, bis(2,2,6,6-tetramethyl-4-piperidinyl) sebacate, or poly{[6-[(1,13,3-tetramethylbutyl)imino]-1,3,5-triazin-2,4-diyl][2-(2,2,6,6-tetramethylpiperidin yl)-nitrilo]-hexamethylene-[4-(2,2,6,6-tetramethylpiperidinyl)-nitrilo]}.

The light stabilizer can effectively capture the active free radicals produced by polymer materials under the action of ultraviolet rays, thereby exerting the effect of light stabilization. The light stabilizer, when used with the ultraviolet absorber, can effectively avoid the photodegradation of polymer materials.

Optionally, the heat stabilizer is selected from any one or a combination of more than two of cuprous halide, copper salt phosphate, or phosphate.

The heat stabilizer can provide long-term stability for polyamide materials and can prevent the materials from becoming brittle at the highest operating temperature and pressure. The heat stabilizer can prevent polyamide materials from being prematurely mechanical fatigue under high temperature, chemical corrosion, and harsh environmental conditions. Commonly used heat stabilizers include BRUGGOLEN H320, PolyAd HS-01, PolyAd HS-03, etc.

Optionally, the lubricant is selected from any one or a combination of more than two of silane polymer, solid paraffin, liquid paraffin, fatty acid salt, calcium stearate, zinc stearate, fatty amide, methylene-bis-stearamide, oleamide, stearamide, ethylene-bis-stearamide, or *N,N-*ethylene-bis-stearamide.

As an optional technical solution of the present application, based on that total weight of the electroplated nylon material is taken as 100 parts, the electroplated nylon material includes the following components, by weight:

| | |
|---|---|
| polyamide | 50 to 80 parts |
| modified mineral | 20 to 50 parts |
| compatibilizer | 2 to 8 parts |
| antioxidant | 0.1 to 1.0 part |
| ultraviolet absorber | 0.1 to 1.0 part |
| light stabilizer | 0.1 to 1.0 part |
| heat stabilizer | 0.1 to 1.0 part |
| lubricant | 0.1 to 1.0 part. |

In a second aspect, the present application provides a method of preparing the electroplated nylon material described in the first aspect. The preparation method includes the following steps. Formulary amounts of polyamide, modified mineral, and compatibilizer are mixed and added into an extruder for melt blending and after extrusion, cooled, dried, and pelletized to obtain the electroplated nylon material.

Optionally, the formulary amounts of the components are mixed for 5 minutes to 10 minutes, for example, 5 minutes, 6 minutes, 7 minutes, 8 minutes, 9 minutes, 10 minutes, etc.

Optionally, the extruder is a twin-screw extruder.

Optionally, the extruder operates at an operating temperature of 210°C to 330°C, for example, 210°C, 220°C, 230°C, 240°C, 250°C, 255°C, 260°C, 270°C, 280°C, 290°C, 300°C, 310°C, 320°C, 330°C, etc.

Optionally, the extruder operates at a screw speed of 300 rpm to 1000 rpm, for example, 300 rpm, 400 rpm, 450 rpm, 500 rpm, 550 rpm, 600 rpm, 650 rpm, 700 rpm, 750 rpm, 800 rpm, 850 rpm, 1000 rpm, etc.

Optionally, the components reside in the extruder for 1 minute to 3 minutes, for example, 1 minute, 1.5 minutes, 2 minutes, 2.5 minutes, 3 minutes, etc.

Compared with the existing art, the present application at least has beneficial effects described below.

In the electroplated nylon material provided by the present application, a modified mineral processed with a coupling agent and a rare earth ion and a compatibilizer are added. Through the synergistic effect of the coupling agent and the rare earth ionization, the dispersing ability of the mineral is improved, and meanwhile, the properties of the nylon material are improved. The notched impact strength of the electroplated nylon material at room temperature is 8.1 kJ/m² to 15.1 kJ/m², the notched impact strength at low temperature is 4.9 kJ/m² to 10.3 kJ/m², the tensile strength may reach 93.6 MPa, and the flexural modulus may reach 6500 MPa. The material is suitable for electroplating with an electroplating qualification rate of 78% to 90%.

### DETAILED DESCRIPTION

For a better understanding of the present application, examples of the present application are listed below. Those skilled in the art are to understand that examples described herein are merely used for a better understanding of the present application and are not to be construed as specific limitations to the present application.

All the experimental materials used in the examples set forth below, unless otherwise specified, are purchased from conventional reagent material manufacturers. In the following examples, the compatibilizer POE-g-MAH used herein can be obtained using the following preparation method.

A three-mouth flask was placed in an oil bath at 120°C, 100 ml of toluene and 20 parts by mass of POE were added to the flask and heated to fully dissolve POE, 0.5 part by mass of initiator dicumyl peroxide (DCP) and 10 parts by mass of maleic anhydride (MAH) were then added. Nitrogen was introduced for protection. The mixture fully reacted for 4 hours to 8 hours, then cooled to room temperature, and filtered to obtain POE-g-MAH. 5 parts by mass of POE-g-MAH was wrapped in filter paper, then put into a Soxhlet extractor, and extracted with acetone for 36 hours to remove unreacted initiator, grafting monomers, and possibly generated MAH homopolymers. The POE-g-MAH after extraction was dried in an oven at 60°C for 10 hours, then dried in a vacuum drying oven to constant weight, and stored for later use.

### Example 1

This example provides an electroplated nylon material, and the electroplated nylon material includes the following components by weight.

| Component | | Parts by weight |
|---|---|---|
| Polyamide (Lanxess B30S) | | 80 |
| Modified mineral | | 20 |
| Compatibilizer | POE-g-MAH | 5 |

The above electroplated nylon material was prepared by using the following method.

The components in the formula were uniformly mixed with a high-speed mixer for 5 minutes. Then the mixture was added into a twin-screw extruder for melt blending, in which the working parameters of the extruder were as follows: the first zone temperature was 210°C, the second zone temperature was 220°C, the third zone temperature was 230°C, the fourth zone temperature was 240°C, the fifth zone temperature was 240°C, the sixth zone temperature was 240°C, the seventh zone temperature was 240°C, the eighth zone temperature was 240°C, the ninth zone temperature was 240°C, the tenth zone temperature was 240°C, the eleventh zone temperature was 235°C, the screw speed was 350 rpm, and the residence time was 3 minutes. After extrusion, the mixture was cooled, dried, and pelletized to obtain the electroplated nylon material.

The preparation method of the modified mineral includes the following steps.
(1) Firstly, 100 parts by weight of mineral, which was montmorillonite, were vacuumized and dried at 120°C for 4 hours and then cooled to 25°C under vacuum.
(2) 0.8 part by weight of mineral was added into 20 mL of toluene and subjected to ultrasonic dispersion at 25°C for 60 minutes to obtain a uniform suspension. Then 0.364 part by weight of silane coupling agent KH-550 was added into the suspension and subjected to ultrasonic mixing for 5 minutes. Then the suspension reacted in a constant temperature tank at 90°C for 8 hours. The reaction solution was centrifuged at 12000 r/min at room temperature, then washed with absolute ethanol three times, and dried in vacuum for 8 hours to obtain the coupling agent-modified mineral. 10 parts by weight of the coupling agent-modified mineral were added into deionized water, stirred, and filtered, and then added into anhydrous ethanol. The mixture was stirred, allowed to stand for 20 hours, filtered, and dried for later use.
(3) Thulium acetate deionized aqueous solution in a mass concentration of 1% was prepared and allowed to stand for 24 hours, and then the coupling agent-modified mineral was added. The mixture was subjected to ultrasonic dispersion for 2 hours, allowed to stand for 36 hours, filtered, and dried in vacuum to constant weight to prepare the modified mineral.

### Example 2

This example provides an electroplated nylon material, and the electroplated nylon material includes the following components by weight.

| Component | | Parts by weight |
|---|---|---|
| Polyamide (Lanxess B30S) | | 80 |
| Modified mineral | | 20 |
| Compatibilizer | POE-g-MAH | 5 |
| Antioxidant | Antioxidant 1010 | 0.1 |
| Ultraviolet absorber | Ultraviolet absorber UV-1577 | 0.1 |
| Light stabilizer | LS-744 | 0.1 |
| Lubricant | Zinc stearate | 0.1 |
| Heat stabilizer | Polyad HS-03 | 0.1 |

The above electroplated nylon material was prepared by using the following method.

The components in the formula were uniformly mixed with a high-speed mixer for 8 minutes. Then the mixture was added into a twin-screw extruder for melt blending, in which the working parameters of the extruder were as follows: the first zone temperature was 240°C, the second zone temperature was 250°C, the third zone temperature was 260°C, the fourth zone temperature was 260°C, the fifth zone temperature was 260°C, the sixth zone temperature was 260°C, the seventh zone temperature was 260°C, the eighth zone temperature was 260°C, the ninth zone temperature was 260°C, the tenth zone temperature was 260°C, the eleventh zone temperature was 255°C, the screw speed was 500 rpm, and the residence time was 1.5 minutes. After extrusion, the mixture was cooled, dried, and pelletized to obtain the electroplated nylon material.

The preparation method of the modified mineral includes the following steps.
(1) Firstly, 100 parts by weight of mineral, which was montmorillonite, were vacuumized and dried at 110°C for 5 hours, and then cooled to 25°C under vacuum.
(2) 0.8 part by weight of mineral was added into 20 mL of toluene and subjected to ultrasonic dispersion at room temperature for 50 minutes to obtain a uniform suspension. Then 0.364 part by weight of silane coupling agent KH-550 was added into the suspension and subjected to ultrasonic mixing for 8 minutes. Then the suspension reacted in a constant temperature tank at 80°C for 8 hours. The reaction solution was centrifuged at 12000 r/min at room temperature to obtain the coupling agent-modified mineral. The obtained coupling agent-modified mineral was then washed with absolute ethanol three times and dried in vacuum for 8 hours. 10 parts by weight of the coupling agent-modified mineral were added into deionized water, stirred, and filtered, and then added into anhydrous ethanol. The mixture was stirred, allowed to stand for 20 hours, filtered, and dried for later use.
(3) Dysprosium acetate deionized aqueous solution in a mass concentration of 1% was prepared and allowed to stand for 24 hours, and then the coupling agent-modified mineral was added. The mixture was subjected to ultrasonic dispersion for 1.5 hours, allowed to stand for 36 hours, filtered, and dried in vacuum to constant weight to prepare the modified mineral.

### Example 3

This example provides an electroplated nylon material, and the electroplated nylon material includes the following components by weight.

| Component | | Parts by weight |
|---|---|---|
| Polyamide (Lanxess B30S) | | 70 |
| Modified mineral | | 30 |
| Compatibilizer | POE-g-MAH | 5 |
| Antioxidant | Antioxidant 1010 | 0.3 |
| Ultraviolet absorber | Ultraviolet absorber UV-1577 | 0.3 |
| Light stabilizer | LS-744 | 0.3 |
| Lubricant | Zinc stearate | 0.3 |
| Heat stabilizer | Polyad HS-03 | 0.3 |

The above electroplated nylon material was prepared by using the following method.

The components in the formula were uniformly mixed with a high-speed mixer for 10 minutes. Then the mixture was added into a twin-screw extruder for melt blending, in which the working parameters of the extruder were as follows: the first zone temperature was 240°C, the second zone temperature was 250°C, the third zone temperature was 260°C, the fourth zone temperature was 260°C, the fifth zone temperature was 260°C, the sixth zone temperature was 260°C, the seventh zone temperature was 260°C, the eighth zone temperature was 260°C, the ninth zone temperature was 260°C, the tenth zone temperature was 260°C, the eleventh zone temperature was 255°C, the screw speed was 850 rpm, and the residence time was 3 minutes. After extrusion, the mixture was cooled, dried, and pelletized to obtain the electroplated nylon material.

The preparation method of the modified mineral includes the following steps.
(1) Firstly, 100 parts by weight of mineral, which was talcum powder, were vacuumized and dried at 120°C for 6 hours and then cooled to room temperature under vacuum.
(2) 0.8 part by weight of mineral was added into 20 mL of toluene and subjected to ultrasonic dispersion at room temperature for 60 minutes to obtain a uniform suspension. Then 0.364 part by weight of silane coupling agent KH-540 was added into the suspension and subjected to ultrasonic mixing for 10 minutes. Then the suspension reacted in a constant temperature tank at 90°C for 8 hours. The reaction solution was centrifuged at 12000 r/min at room temperature, then washed with absolute ethanol three times, and dried in vacuum for 8 hours to obtain the coupling agent-modified mineral. 10 parts by weight of the coupling agent-modified mineral were added into deionized water, stirred, and filtered, and then added into anhydrous ethanol. The mixture was stirred, allowed to stand for 20 hours, filtered, and dried for later use.
(3) Terbium nitrate deionized aqueous solution in a mass concentration of 1.5% was prepared and allowed to stand for 24 hours, and then the coupling agent-modified mineral was added. The mixture was subjected to ultrasonic dispersion for 2.5 hours, allowed to stand for 36 hours, filtered, and dried in vacuum to constant weight to prepare the modified mineral.

### Example 4

This example provides an electroplated nylon material, and the electroplated nylon material includes the following components by weight.

| Component | | Parts by weight |
|---|---|---|
| Polyamide (Lanxess B30S) | | 60 |
| Modified mineral | | 40 |
| Compatibilizer | SEBS-g-MAH (Kraton FG1901) | 5 |
| Antioxidant | Antioxidant 1010 | 0.5 |
| Ultraviolet absorber | Ultraviolet absorber UV-329 | 0.5 |
| Light stabilizer | UV-294 | 0.5 |
| Lubricant | Zinc stearate | 0.3 |
| Heat stabilizer | Polyad HS-01 | 0.3 |

The above electroplated nylon material was prepared by using the same method as the method in Example 2.

### Example 5

This example provides an electroplated nylon material, and the electroplated nylon material includes the following components by weight.

| Component | | Parts by weight |
|---|---|---|
| Polyamide (Lanxess B30S) | | 50 |
| Modified mineral | | 50 |
| Compatibilizer | ABS-g-MAH (ALMAAK, R500) | 5 |
| Antioxidant | Antioxidant 618 | 0.5 |
| Ultraviolet absorber | Ultraviolet absorber UV-1577 | 0.5 |
| Light stabilizer | UV-294 | 0.7 |
| Lubricant | Calcium stearate | 0.3 |
| Heat stabilizer | Cuprous bromide | 0.5 |

The above electroplated nylon material was prepared by using the same method as the method in Example 2.

### Example 6

This example provides an electroplated nylon material, and the electroplated nylon material includes the following components by weight.

| Component | | Parts by weight |
|---|---|---|
| Polyamide (Lanxess B30S) | | 70 |
| Modified mineral | | 30 |
| Compatibilizer | EPDM-g-MAH (Dupont FUSCBOND N416) | 2 |
| Antioxidant | Antioxidant 168 | 0.5 |
| Ultraviolet absorber | Ultraviolet absorber UV-1577 | 0.3 |
| Light stabilizer | GW-540 | 0.3 |
| Lubricant | Zinc stearate | 0.5 |
| Heat stabilizer | Polyad HS-03 | 0.7 |

The above electroplated nylon material was prepared by using the same method as the method in Example 2.

### Example 7

This example provides an electroplated nylon material, and the electroplated nylon material includes the following components by weight.

| Component | | Parts by weight |
|---|---|---|
| Polyamide (Xinhui Meida M2000) | | 70 |
| Modified mineral | | 30 |
| Compatibilizer | POE-g-MAH | 8 |
| Antioxidant | Antioxidant 1010 | 0.3 |
| Ultraviolet absorber | Ultraviolet absorber UV-5411 | 0.5 |
| Light stabilizer | GW-540 | 0.7 |
| Lubricant | Zinc stearate | 0.3 |
| Heat stabilizer | Polyad HS-03 | 0.5 |

The above electroplated nylon material was prepared by using the same method as the method in Example 2.

### Comparative Example 1

Compared with Example 3, the polyamide in this comparative example was 100 parts by weight, and the modified mineral and the compatibilizer POE-g-MAH were not involved, while the remaining components and preparation method were the same as those in Example 3.

### Comparative Example 2

Compared with Example 3, the polyamide in this comparative example was 70 parts by weight, the modified mineral was replaced with an unprocessed mineral, the mineral was 30 parts by weight, and the compatibilizer POE-g-MAH was not involved, while the remaining components and preparation method were the same as those in Example 3.

### Comparative Example 3

Compared with Example 3, the polyamide in this comparative example was 70 parts by weight, the modified mineral was replaced with a coupling agent-processed mineral, the coupling agent-processed mineral was 30 parts by weight, and the compatibilizer POE-g-MAH was not involved, while the remaining components and preparation method were the same as those in Example 3.

### Comparative Example 4

Compared with Example 3, the polyamide in this comparative example was 100 parts by weight, and the compatibilizer POE-g-MAH was not involved, while the remaining components and preparation method were the same as those in Example 3.

### Comparative Example 5

Compared with Example 3, the polyamide in this comparative example was 100 parts by weight, and the modified mineral was not involved, while the remaining components and preparation method were the same as those in Example 3.

### Comparative Example 6

Compared with Example 3, the polyamide in this comparative example was 70 parts by weight, the modified mineral was replaced with a rare earth ion-processed mineral, and the rare earth ion-processed mineral was 30 parts by weight, while the remaining components and preparation method were the same as those in Example 3.

The preparation method of the rare earth ion-processed mineral includes the following steps. Firstly, 100 parts by weight of mineral were vacuumized and dried for 4 hours at 100°C, in which the mineral was talcum powder, and then cooled to room temperature under vacuum. The rare earth acetate deionized aqueous solution in a mass concentration of 1% was prepared and allowed to stand for 24 hours, and then the mineral was added. The mixture was subjected to ultrasonic dispersion for 2 hours, allowed to stand for 36 hours, filtered, and dried in vacuum to constant weight to prepare the mineral only processed by the rare earth ion.

### Comparative Example 7

Compared with Example 3, the polyamide in this comparative example was 70 parts by weight, the modified mineral was replaced with an unprocessed mineral, and the mineral was 30 parts by weight, while the remaining components and preparation method were the same as those in Example 3.

### Comparative Example 8

Compared with Example 3, the polyamide in this comparative example was 70 parts by weight, the modified mineral was replaced with a coupling agent-processed mineral, and the coupling agent-processed mineral was 30 parts by weight, while the remaining components and preparation method were the same as those in Example 3.

### Performance Test

1. The electroplated nylon materials prepared in Examples 1 to 7 and Comparative Examples 1 to 8 were tested. The performance indexes include tensile strength, flexural modulus, and Charpy notched impact strength at 23°C and -30°C. The specific test data are shown in the following Table 1.

**Table 1**

| Performance index | Tensile strength MPa | Flexural modulus MPa | Charpy notched impact strength at 23°C kJ/m² | Charpy notched impact strength at -30°C kJ/m² |
|---|---|---|---|---|
| Test standard | ISO 527 | ISO 178 | ISO 179-1/eA | ISO 179-1/eA |
| Example 1 | 72.6 | 3926 | 8.9 | 6.5 |
| Example 2 | 76.5 | 4356 | 11.5 | 8.2 |
| Example 3 | 84.9 | 5218 | 13.2 | 8.9 |
| Example 4 | 90.1 | 5985 | 12.4 | 8.4 |
| Example 5 | 93.6 | 6500 | 8.8 | 5.4 |
| Example 6 | 86.1 | 5500 | 8.1 | 4.9 |
| Example 7 | 80.4 | 4772 | 15.1 | 10.3 |
| Comparative Example 1 | 71.3 | 2300 | 4.3 | 3.1 |
| Comparative Example 2 | 81.5 | 4872 | 4.5 | 3.2 |
| Comparative Example 3 | 83.6 | 5123 | 4.8 | 3.4 |
| Comparative Example 4 | 89.1 | 5789 | 5.3 | 3.7 |
| Comparative Example 5 | 65.1 | 2035 | 12.8 | 9.3 |
| Comparative Example 6 | 84.7 | 5347 | 5.5 | 3.9 |
| Comparative Example 7 | 76.8 | 4165 | 7.9 | 4.6 |
| Comparative Example 8 | 78.3 | 4579 | 8.6 | 5.7 |

As can be seen from the data in Table 1, the performance parameters of the nylon materials obtained in the examples are significantly improved compared with the nylon materials in the comparative examples, which shows that the electroplated nylon material provided by the present application has excellent performance, high tensile strength and flexural modulus, good rigidity, and good toughness at normal and low temperatures.

As can be seen from Example 3 and Comparative Example 5, without addition of modified mineral, the tensile strength and flexural modulus of the obtained materials are low. As can be seen from Example 3 and Comparative Examples 1 to 4, without compatibilizer, the impact toughness of the obtained materials at normal and low temperatures is low regardless of whether the mineral is modified or not. As can be seen from the comparison between Example 3 and Comparative Examples 6 to 8, after the minerals are processed with the coupling agent and the rare earth ion, the toughness of the obtained materials at normal and low temperatures is significantly better than that of the materials involving unmodified minerals and materials involving minerals modified by the coupling agent or the rare earth ion alone.

2. The electroplated nylon materials prepared in Examples 1 to 7 and Comparative Examples 1 to 8 were injection molded into templates of 140 × 90 × 3 mm, and the templates were electroplated according to the electroplating process respectively. The electroplating qualification rates of the electroplated templates were evaluated. The results are shown in Table 2.

**Table 2**

| | |
|---|---|
| Performance index | Electroplating qualification rate (%) |
| Test standard | Mercedes-Benz electroplated part appearance standard |
| Example 1 | 78 |
| Example 2 | 81 |
| Example 3 | 87 |
| Example 4 | 86 |
| Example 5 | 79 |
| Example 6 | 83 |
| Example 7 | 90 |
| Comparative Example 1 | 0 |
| Comparative Example 2 | 40 |
| Comparative Example 3 | 66 |
| Comparative Example 4 | 84 |
| Comparative Example 5 | 0 |
| Comparative Example 6 | 73 |
| Comparative Example 7 | 70 |
| Comparative Example 8 | 75 |

As can be seen from the data in Table 2, when the electroplated nylon material contains the modified mineral, that is, Examples 1 to 7 and Comparative Example 4, the obtained nylon material is suitable for electroplating, and the electroplating qualification rate is 78% to 90%. When no mineral is contained, for example, Comparative Examples 1 and 5, the obtained nylon material cannot be used for electroplating, and the electroplating qualification rate is 0. When the added mineral is just processed with the coupling agent or processed with the rare earth ion, the electroplating qualification rate of the nylon materials is lower than that of the electroplating nylon materials containing the modified mineral, which shows that the coupling agent and the rare earth ion have the synergistic effect in the processing of the mineral.

The applicant has stated that the above are only specific embodiments of the present application, and the scope of the present application is not limited thereto.

## Claims

1. An electroplated nylon material, wherein based on that total weight of the electroplated nylon material is taken as 100 parts, the electroplated nylon material comprises the following components, by weight:
| | |
|---|---|
| polyamide | 50 to 80 parts |
| modified mineral | 20 to 50 parts |
| compatibilizer | 2 to 8 parts. |

2. The electroplated nylon material according to claim 1, wherein the modified mineral is a mineral modified by a modifier; and the modifier is a coupling agent and a rare earth ion.

3. The electroplated nylon material according to claim 1 or 2, wherein the polyamide is selected from any one or a combination of more than two of PA6, PA46, PA56, PA66, PA610, PA612, PA613, PA11, PA12, PA1010, PA1012, PA1111, PA1313, PA6T, PA9T, PA10T, PA6I, or PA6I/6T.

4. The electroplated nylon material according to claim 2, wherein the mineral is selected from any one or a combination of more than two of a silicate mineral, a carbonate mineral, a borate mineral, or a metal oxide;
optionally, the mineral is selected from any one or a combination of more than two of wollastonite, pyroxene, dickite, vermiculite, halloysite, sepiolite, montmorillonite, bentonite, kaolin, talcum, margarite, phlogopite, sericite, biotite, muscovite, limestone, nahcolite, kalicinite, calcite, dolomite, ankerite, huntite, fairchildite, shortite, carbocernaite, nesquehonite, trona, gaylussite, hydromagnesite, ascharite, ludwigite, lagonite, priceite, aluminium oxide, iron oxide, magnesium oxide, zinc oxide, copper oxide, or calcium oxide;
optionally, the coupling agent is selected from any one or a combination of more than two of a silane coupling agent, a titanate coupling agent, an aluminate coupling agent, or a zirconate coupling agent;
optionally, the coupling agent is selected from any one or a combination of more than two of γ-aminopropyltrimethoxysuane, γ-aminopropyltriethoxysilane, γ-glycidoxypropyltrimethoxysilane, γ-glycidoxypropyltriethoxysilane, *N-*β-(aminoethyl)-γ-aminopropyltrimethoxysilane, *N-*(β-aminoethyl)-γ-aminopropylmethyldimethoxysilane, γ-ureidopropyltriethoxysilane, *N-*aminoethyl-γ-aminopropyltriethoxysilane, γ-aminopropylmethyldiethoxysilane, *N-*(β-aminoethyl)-γ-aminopropyltriethoxysilane, polyaminoalkyltrialkoxysilane, anilino-methyl-trimethoxysilane, isopropyl tri(dioctylphosphoryloxy) titanate, titanium triisostearoylisopropoxide, isopropyl dioleic(dioctylphosphate) titanate, isopropyl tri(dioctylphosphate)titanate, isopropyl trioleyl titanate, isopropyl tri(dioctylpyrophosphate) titanate, bis(P,P-bis-ethylhexyl diphosphato)ethanediolato titanate, bis(P,P-bis-ethylhexyl diphosphato)ethanediolato titanate triethanolamino chelate, tetraisopropyl di(dioctylphosphate) titanate, distearoyl isopropoxy aluminate, isopropoxy distearate acyloxy aluminate, trimethyl aluminate, triisopropyl aluminate, tribenzyl aluminate, alkoxy tris(vinyl-ethoxy) zirconate, alkoxy tris(p-aminophenoxy) zirconate, bis(diethyl citrate) dipropoxy zirconium chelate, or tetrakis(triethanolamino) zirconium; and
optionally, the rare earth ion is selected from any one or a combination of more than two of zirconium ion, cobalt ion, lanthanum ion, praseodymium ion, samarium ion, europium ion, gadolinium ion, holmium ion, erbium ion, ytterbium ion, lutetium ion, scandium ion, indium ion, neodymium ion, cerium ion, yttrium ion, thulium ion, dysprosium ion, or terbium ion.

5. The electroplated nylon material according to any one of claims 1 to 4, wherein a preparation method of the modified mineral comprises the following steps:
(1) dispersing a mineral in a solvent after vacuum drying;
(2) mixing and reacting the mineral with a coupling agent, and separating to obtain a coupling agent-modified mineral; and
(3) dispersing the coupling agent-modified mineral in a solution containing a rare earth ion to obtain the modified mineral.

6. The electroplated nylon material according to any one of claims 1 to 5, wherein the vacuum drying in step (1) is performed at a temperature of 100°C to 120°C for 4 hours to 6 hours;
optionally, the solvent in step (1) is toluene;
optionally, the reacting in step (2) is performed at a temperature of 80°C to 100°C for 6 hours to 8 hours;
optionally, the solution containing the rare earth ion in step (3) is selected from any one of a rare earth acetate solution, a rare earth nitrate solution, or a rare earth sulfate solution;
optionally, the rare earth ion in the solution containing the rare earth ions in step (3) is at a mass concentration of 0.5% to 1.5%; and
optionally, the dispersing in step (3) is performed in a method of ultrasonic dispersing for 1.5 hours to 2.5 hours.

7. The electroplated nylon material according to any one of claims 1 to 6, wherein the compatibilizer is selected from any one or a combination of more than two of POE-g-MAH, SBS-g-MAH, SEBS-g-MAH, EPDM-g-MAH, ABS-g-MAH, ASA-g-MAH, LDPE-g-MAH, LLDPE-g-MAH, UHMWPE-g-MAH, SMA, SAN-g-MAH, POE-g-GMA, EPDM-g-GMA, PE-g-GMA, MB-g-GMA, MGE, or IA, optionally POE-g-MAH.

8. The electroplated nylon material according to any one of claims 1 to 7, wherein the electroplated nylon material further comprises 0.1 to 1.0 part of antioxidant by weight;
optionally, the electroplated nylon material further comprises 0.1 to 1.0 part of ultraviolet absorber by weight;
optionally, the electroplated nylon material further comprises 0.1 to 1.0 part of light stabilizer by weight;
optionally, the electroplated nylon material further comprises 0.1 to 1.0 part of heat stabilizer by weight; and
optionally, the electroplated nylon material further comprises 0.1 to 1.0 part of lubricant by weight.

9. The electroplated nylon material according to any one of claims 1 to 8, wherein the antioxidant is selected from any one or a combination of more than two of tris(2,4-di-tert-butylphenyl)phosphite, pentaerythritol tetrakis[β-(3,5-di-tert-butyl-4-hydroxyphenyl)propionate], *N*,*N*'-bis[β-(3,5-di-tert-butyl-4-hydroxyphenyl)propionyl] hexamethylenediamine, bis(2,4-di-tert-butylphenyl)pentaerythritol diphosphite, n-octadecyl-β-(3,5-di-tert-butyl-4-hydroxyphenyl)propionate, tris(2,4-di-tert-butyl)phosphite, hindered phenol n-octadecyl-(3,5-di-butyl-4-hydroxy-phenyl)propionate, 1,3,5-tris(3,5-di-tert-butyl,4-hydroxybenzyl)-s-triazine, 2,4,6-(1*H*,3*H*,5*H*)-trione, *N*,*N*'-bis(3-(3,5-di-tert-butyl-4-hydroxyphenyl)propionyl) hexamethylenediamine, triethylene glycol bis[β-(3-tert-butyl-4-hydroxy-5-methylphenyl)propionate], or distearyl pentaerythritol diphosphite;
optionally, the ultraviolet absorber is selected from any one or a combination of more than two of a benzoate ultraviolet absorber, a salicylate ultraviolet absorber, a benzophenone ultraviolet absorber, a benzotriazole ultraviolet absorber, or a triazine ultraviolet absorber;
optionally, the ultraviolet absorber is selected from any one or a combination of more than two of 2,4-dihydroxybenzophenone, 2-hydroxy-4-methoxybenzophenone, 2-hydroxy-4-n-octyloxybenzophenone, 2-(2-hydroxy-5-methyl-phenyl)benzotriazole, 2-(2'-hydroxy-3',5'-bis(α,α-dimethylbenzyl)phenyl)benzotriazole, 2-(2-hydroxy-3-tert-butyl-5-methylphenyl)-5-chlorobenzotriazole, 2-(2'-hydroxy-3',5'-di-tert-phenyl)-5-chlorobenzotriazole, 2-(2-hydroxy-3,5-di-tert-pentylphenyl)benzotriazole, 2-(2'-hydroxy-4'-benzoyloxyphenyl)-5-chloro-2*H*-benzotriazole, resorcinol monobenzoate, 2-(4,6-bis(2,4-dimethylphenyl)-1,3,5-triazin-2-yl)-5-octyloxyphenol, 2,4,6-tris(2'-hydroxy-4'-n-butoxyphenyl)-1,3,5-triazine, 2-(4,6-diphenyl-1,3,5-triazin-2)-5-n-hexyloxyphenol, phenyl salicylate, salicylic acid-4-isopropylbenzyl ester, 2-ethylhexyl salicylate, or hexamethylphosphoric triamide;
optionally, the light stabilizer is selected from any one or a combination of more than two of 4-benzoyloxy-2,2,6,6-tetramethylpiperidine, bis(1,2,2,6,6-pentamethylpiperidinol) sebacate, benzoic acid 2,2,6,6-tetramethylpiperidine, a polymer of butanedioic acid and 4-hydroxy-2,2,6,6-tetramethyl-1-piperidineethanol, bis(2,2,6,6-tetramethyl-4-piperidinyl) sebacate, or poly{[6-[(1,1,3,3-tetramethylbutyl)imino]-1,3,5-triazin-2,4-diyl][2-(2,2,6,6-tetramethylpiperidin yl)-nitrilo]-hexamethylene-[4-(2,2,6,6-tetramethylpiperidinyl)-nitrilo]};
optionally, the heat stabilizer is selected from any one or a combination of more than two of cuprous halide, copper salt phosphate, or phosphate; and
optionally, the lubricant is selected from any one or a combination of more than two of silane polymer, solid paraffin, liquid paraffin, fatty acid salt, calcium stearate, zinc stearate, fatty amide, methylene-bis-stearamide, oleamide, stearamide, ethylene-bis-stearamide, or *N*,*N*-ethylene-bis-stearamide.

10. The electroplated nylon material according to any one of claims 1 to 9, wherein based on that total weight of the electroplated nylon material is taken as 100 parts, the electroplated nylon material comprises the following components, by weight:
| | |
|---|---|
| polyamide | 50 to 80 parts |
| modified mineral | 20 to 50 parts |
| compatibilizer | 2 to 8 parts |
| antioxidant | 0.1 to 1.0 part |
| ultraviolet absorber | 0.1 to 1.0 part |
| light stabilizer | 0.1 to 1.0 part |
| heat stabilizer | 0.1 to 1.0 part |
| lubricant | 0.1 to 1.0 part. |

11. A method for preparing the electroplated nylon material according to any one of claims 1 to 10, comprising the following steps:
mixing formulary amounts of polyamide, a modified mineral, and a compatibilizer, adding the mixed polyamide, modified mineral, and compatibilizer into an extruder for melt blending, and after extrusion, cooling, drying, and pelletizing to obtain the electroplated nylon material.

12. The preparation method according to claim 11, wherein the formulary amounts of the polyamide, the modified mineral, and the compatibilizer are mixed for 5 minutes to 10 minutes;
optionally, the extruder is a twin-screw extruder;
optionally, the extruder operates at an operating temperature of 210°C to 330°C;
optionally, the extruder operates at a screw speed of 300 rpm to 1000 rpm; and
optionally, the components reside in the extruder for 1 minute to 3 minutes.
